# EUROPEAN PATENT APPLICATION

(11) **EP 4 443 125 A1**
(43) Date of publication of application: **09.10.2024**
(21) Application number: 24168582.5
(22) Date of filing: 04.04.2024
(51) Int. Cl.: G01L 5/1627, G01L 1/22, G01L 5/20

(54) **MULTI-AXIS LOAD CELL BODY**

(30) Priority: 05.04.2023 US 202363457234 P; 03.04.2024 US 202418625762
(71) Applicant: Illinois Tool Works Inc., Glenview IL 60025 (US)
(72) Inventor: MEYER, Richard A., Glenview, 60025 (US); MEYER, Nicholas E., Glenview, 60025 (US)
(74) Representative: HGF

(57) **Abstract**

A load cell body for transmitting forces and moments in plural directions includes a rigid central hub having a central axis and a rigid annular ring concentric with the central hub about the central axis. At least three radial members extend radially with respect to the central axis along corresponding longitudinal axes from the central hub to the annular ring where each radial member includes a center body with an aperture extending there through along an aperture axis that is parallel to the central axis. A first flexure joins the center body to the central hub, while a second flexure joins the center body to the annular ring.

## Description

### CROSS-REFERENCE TO RELATED APPLICATION(S)

The present application is based on and claims the benefit of U.S. provisional patent application Serial No. 63/457,234, filed on April 5, 2023, the content of which is hereby incorporated by reference in its entirety.

### BACKGROUND OF THE INVENTION

The present invention relates to a load cell that transmits and measures linear forces along and moments about three orthogonal axes. More particularly, a compact load cell body is disclosed having features well suited for a wheel force transducer, in one exemplary embodiment.

Wheel force transducer or load cells for measuring forces along or moments about three orthogonal axes are known. The wheel force transducer typically is mounted between and to a vehicle spindle and a portion of a vehicle rim. The transducer measures forces and moments reacted through a wheel assembly at the spindle as the vehicle is operated.

One form of a wheel force transducer that has enjoyed substantial success and critical acclaim has been the Swift^{®} transducer sold by MTS Systems Corporation of Eden Prairie, Minn. and is described in detail in U.S. Pat. Nos. 5,969,268 and 6,038,933. Generally, this transducer includes a load cell body having a rigid central member, a rigid annular ring and a plurality of tubular members extending radially and joining the central member to the annular ring. A plurality of sensing circuits is mounted to the plurality of tubular members. The rigid central member is mounted to the vehicle spindle, while the annular ring is attached to the vehicle rim. An encoder measures the angular position of the load cell body allowing the forces transmitted through the radial tubular members to be resolved with respect to an orthogonal stationary coordinate system.

Although the Swift^{®} transducer is well suited for measuring loads reacted through the vehicle spindle on a vehicle such as passenger cars, there is on-going need to provide an improved compact load cell, which is easy to manufacture.

### SUMMARY OF THE INVENTION

This Summary and the Abstract herein are provided to introduce a selection of concepts in a simplified form that are further described below in the Detailed Description. This Summary and the Abstract are not intended to identify key features or essential features of the claimed subject matter, nor are they intended to be used as an aid in determining the scope of the claimed subject matter. The claimed subject matter is not limited to implementations that solve any or all disadvantages noted in the Background.

One general aspect includes a load cell body for transmitting forces and moments in plural directions. The load cell body includes a rigid central hub having a central axis and a rigid annular ring concentric with the central hub about the central axis. At least three radial members extend radially with respect to the central axis along corresponding longitudinal axes from the central hub to the annular ring where each radial member includes a center body with an aperture extending there through along an aperture axis that is parallel to the central axis. A first flexure joins the center body to the central hub, while and a second flexure joins the center body to the annular ring.

Implementations may include one or more of the following features. The load cell body where each of the first flexures and each of the second flexures are compliant for moments about the central axis. At least one of the first flexure and the second flexure of each radial member includes a sensor configured to measure bending of the flexure for a moment about the central axis. The sensor may include a strain sensor. The sensor may include a first strain sensor on a first side of the at least one of the first flexure and the second flexure of each radial member and a second strain sensor on a second side of the at least one of the first flexure and the second flexure of each radial member. Each of the first strain sensors and each of the second strain sensors can be connected in a Wheatstone bridge.

Each of a plurality of center bodies can include at least one center body sensor configured to measure a force on the central hub along or orthogonal to the central axis. An outer surface of each center body includes a plurality of portions of reduced thickness. The at least one center body sensor may include a plurality of first center body sensors configured to measure a force on the central hub along the central axis. The plurality of first center body sensors of each radial member is connected in a Wheatstone bridge. Each of the first center body sensors can be a strain gage.

Each portion of reduced thickness can include a planar surface extending in a first direction parallel to the central axis and extending in a second direction radially with respect to the central hub for each associated radial member, each of the first center body sensors being disposed on one of the planar surfaces.

The at least one center body sensor may include a plurality of second center body sensors configured to measure a force on the central hub transverse to the central axis. The plurality of radial members can equal four members spaced at equal angular intervals about the central axis, and where the plurality of second center body sensors of a first pair of opposed radial members are each connected together in a first Wheatstone bridge to measure a first force on the central hub transverse to the central axis, and where the plurality of second center body sensors of a second pair of opposed radial members are each connected together in a second Wheatstone bridge to measure a second force on the central hub transverse to the central axis and transverse to the first force. Each of the second center body sensors can be a strain gage disposed on an inside surface forming one of the center body apertures. The central hub, the annular ring and the at least three radial members are preferably integral formed from a single unitary body.

One general aspect also includes a load cell body for transmitting forces and moments in plural directions. The load cell body includes a rigid central hub having a central axis, a rigid annular ring concentric with the central hub about the central axis, and at least three radial members extending radially with respect to the central axis along corresponding longitudinal axes from the central hub to the annular ring. Each radial member may include a center body with an aperture extending there through along an aperture axis that is parallel to the central axis, a first flexure joining the center body to the central hub and a second flexure joining the center body to the annular ring. A plurality of sensors is configured to sense strain in each of the center bodies and/or flexure members to provide signal(s) indicative of force and/or moments with respect to the central hub or the annular ring.

One general aspect also includes a method of making a load cell body for transmitting forces and moments in plural directions. The method includes fabricating from a single block of material an integral assembly with a rigid central hub, a rigid annular ring concentric with the hub and at least three radial members extending radially with respect to the central axis along corresponding longitudinal axes from the central hub to the annular ring where each radial member includes a center body with an aperture extending therethrough along an aperture axis that is parallel to the central axis, a first flexure joining the center body to the central hub, and a second flexure joining the center body to the annular ring.

Implementations may include one or more of the following features. The method where fabricating may include for each radial member an outer surface of each radial member that includes a plurality of portions of reduced thickness. Each portion of reduced thickness can include a planar surface extending in a first direction parallel to the central axis and extending in a second direction radially with respect to the central hub for each associated radial member.

### BRIEF DESCRIPTION OF THE DRAWINGS

FIG. 1 is a perspective view of a load cell body.
FIG. 2 is a top plan view of the load cell body.
FIGS. 3 and 4 are diagrams illustrating exemplary sensors for use with the load cell body.
FIG. 5 illustrates Wheatstone bridges for the sensors of FIGS. 3 and 4.

### DETAILED DESCRIPTION OF THE ILLUSTRATIVE EMBODIMENT

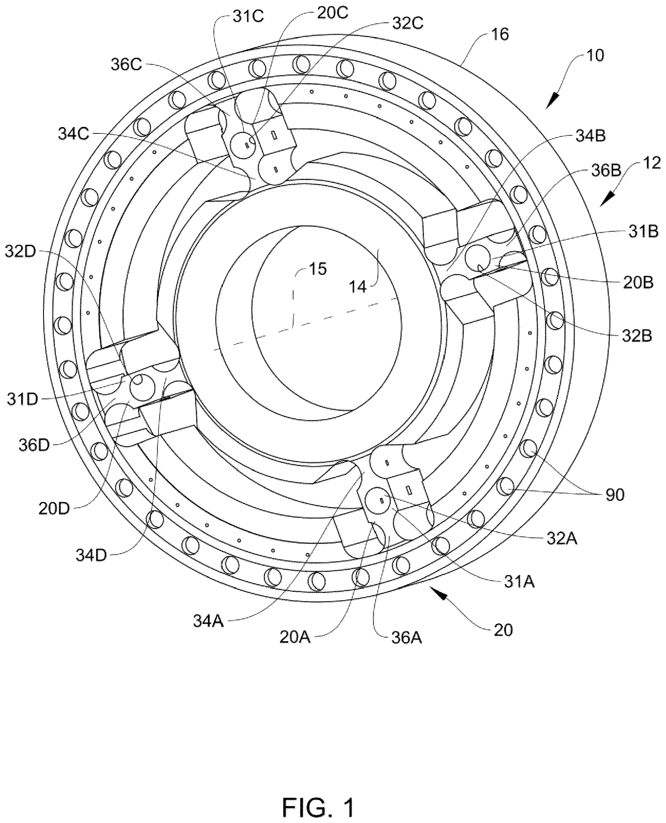

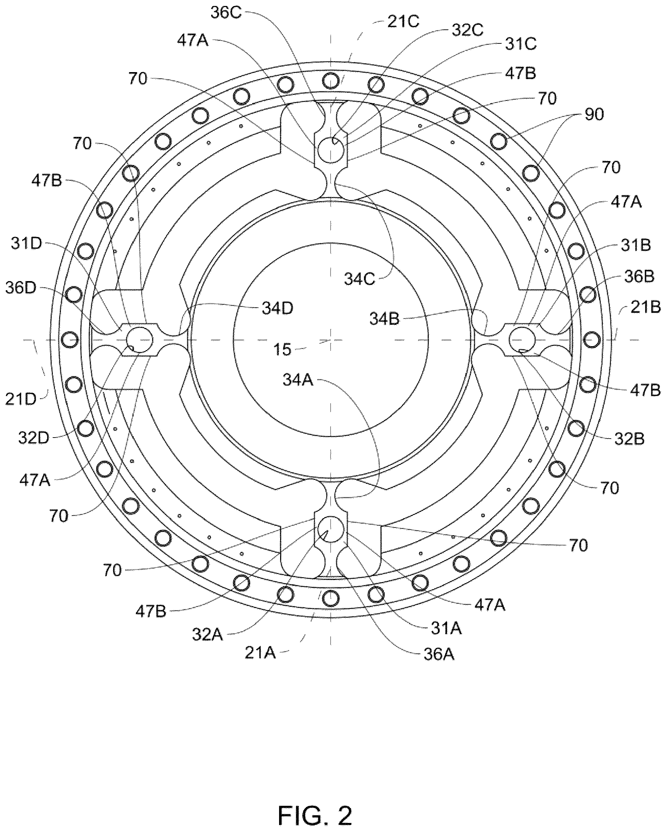

FIGS. 1 and 2 illustrate a load cell body 10. The load cell body 10 preferably includes an integral body 12 fabricated from a single unitary block of material. The body 12 includes a rigid central hub 14 and a rigid annular ring 16 that is concentric with the central hub 14 about a central axis 15. A plurality of radial members 20 join the central hub 14 to the annular ring 16. In the embodiment illustrated, the plurality of radial members 20 comprises four members 20A, 20B, 20C and 20D. Each of the members 20A-20D extend radially from the central hub 14 toward the annular ring 16 along corresponding longitudinal axes 21A, 21B, 21C and 21D. Preferably, axis 21A is aligned with axis 21C, while axis 21B is aligned with axis 21D. In addition, axes 21A and 21C are perpendicular to axes 21B and 21D. Although illustrated wherein the plurality of radial members 20 equals four, it should be understood that any number of members three or more can be used to join the central hub 14 to the annular ring 16. Preferably, the plurality of radial members 20 are spaced at equal angular intervals about the central axis 15.

Output signals from sensors described below are indicative of force and moment components transmitted between the central hub 14 and the annular ring 16 in six degrees of freedom. For purposes of explanation, an orthogonal coordinate system 45 can be defined wherein an X-axis is aligned with the longitudinal axes 20A and 20C; a Y-axis is aligned with the longitudinal axes 20B and 20D; and a Z-axis is aligned with the central axis 15. It should be understood that the number of sensors and the number of sensing circuits can be reduced if measured forces and moments of less than six degrees of freedom is desired.

Generally, each radial member 20A-20D is of a similar design and comprises a center body 31A-31D with an aperture 32A-32D extending there through, each having an aperture axis that is parallel to the central axis 15. A first flexure 34A-34D joins each associated center body 31A-31D to the central hub 14, while a second flexure 36A-36D joins the associated center body 31A-31D to the annular ring 16. Each of the first flexures 34A-34D and each of the second flexures 36A-36D are compliant for sensing moments about the central axis 15, while each of the first flexures 34A-34D and each of the second flexures 36A-36D are substantially rigid for radial forces there through between the central hub 14 and the annular ring 16 along the respective axes 21A-21D.

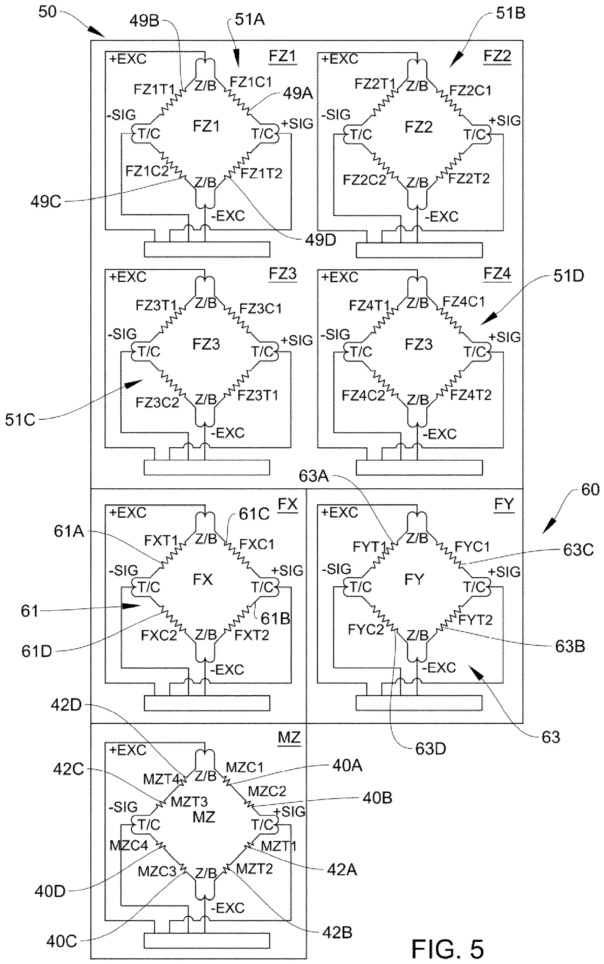

In order to sense a moment about the central axis 15, at least one of the first flexures 34A-34D and 36A-36D of each radial member 20A-20D includes a sensor configured to measure bending of the associated flexure for a moment about the central axis 15. In one embodiment, the sensor comprises a strain sensor. In the illustrated embodiment, a first strain sensor 40A-40D is disposed on a first side of the at least one of the first flexures 34A-34D and second flexures 36A-36D, while a second strain sensor 42A-42D is disposed on a second side of the at least one of the first flexures 34A-34D and second flexures 36A-36D. In the embodiment illustrated, the strain sensors 40A-40D and 42A-42D are disposed on opposite sides of the first flexures 34A-34D. Referring to FIG. 5, each of the first strain sensors 40A-40D and each of the second strain sensors 42A-42D are connected in a Wheatstone bridge as illustrated in FIG. 5 so as to sense and provide an output signal in accordance with the moment about the central axis 15.

The load cell body 10 can also be configured with sensors to measure a force on the central hub 14 along and/or orthogonal to the central axis 15. With respect to forces orthogonal to the central axis 15, the sensors can be considered also to measure radial forces between the central hub 14 and the annular ring 16 along the respective axes 21A-21D.

Each of the plurality of center bodies 31A-31D includes at least one center body sensor configured to measure a radial force on the central hub 14 orthogonal to the central axis 15 or a force on the central hub 14 that is along a central axis 15. Preferably, each center body 31A-31D includes a plurality of portions of reduced thickness, preferably at least two such portions identified at 47A and 47B formed on opposite sides of the apertures of each of the center bodies 31A-31D that are, for example, midway between each respective first flexure 34A-34D and second flexure 36A-36D along each half of the rim of each center body 31A-31D.

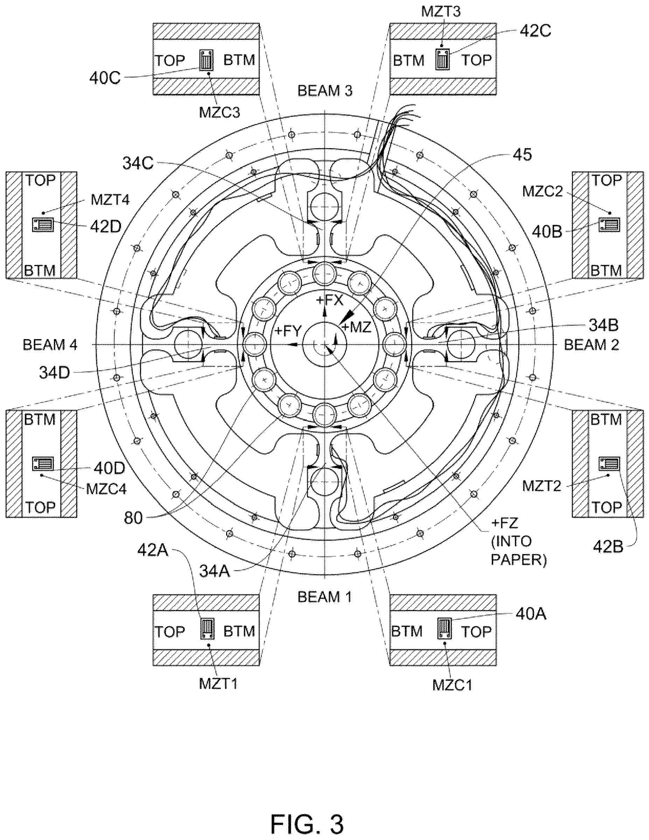

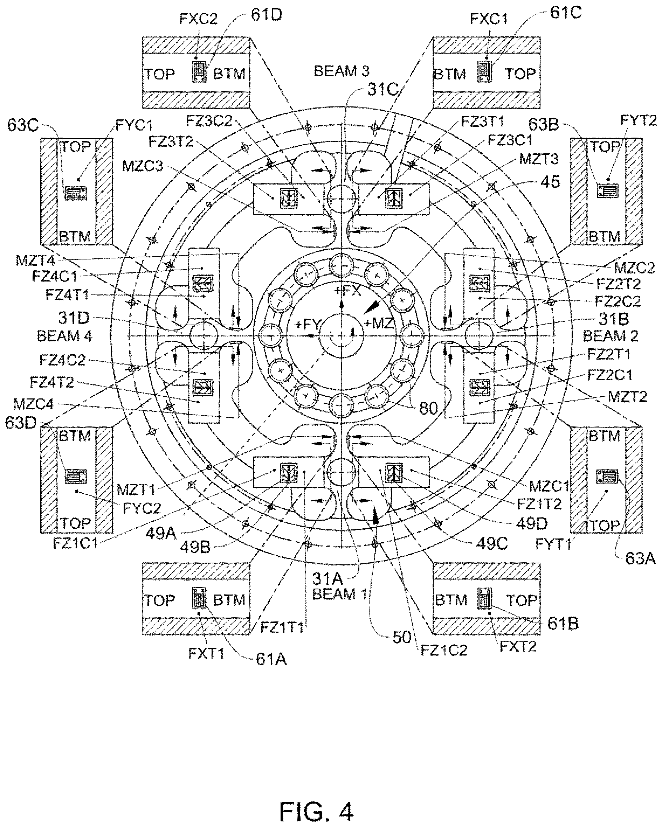

In one embodiment, the at least one center body sensor comprises a plurality of first center body sensors 50 configured to measure a force on the central hub 14 along the central axis 15 for each radial member 20A-20D. Referring to radial member 20A by way of example, the first center body sensors 50 comprise strain sensors mounted to each of the portions of reduced thickness 47A, 47B. In particular, four strain sensors are provided connected together in a Wheatstone bridge 51A (FIG. 5) with two strain sensors 49A,49B and 49C,49D provided on each portion 47A, 47B, respectively, of reduced thickness as illustrated in FIGS. 3 and 4. Each of the other radial members 20B-20D have similar Wheatstone bridges as illustrated in Fig. 5. Hence, each radial member 20A-20D is sensitive to a force along the central axis 15 wherein the total force along the central axis 15 is obtained by adding the corresponding values represented by the output signals of the Wheatstone bridges provided on the radial members 20A-20D, while overturning moments are obtained from the difference in output signals from opposed radial members, i.e. an overturning moment about the X-axis is obtained from the output signals of the Wheatstone bridges 51B and 51D from radial members 20B and 20D, while an overturning moment about the Y-axis is obtained from the output signals of the Wheatstone bridges 51A and 51C from radial members 20A and 20C.

As indicated above, the load cell body 10 can also be used to measure forces on the central hub 14 transverse to the central axis 15 or stated in another way, sensitive to measure radial forces between the central hub 14 and the annular ring 16 along the axes 21A-21D. Although the number radial members could comprise less than four, in an advantageous embedment, four radial members 21A-21D are provided about the central axis 15 at equal angular intervals, i.e. 90° apart. A plurality of second center body sensors 60 is provided on radial members 20A-20D collectively as described below and configured to measure force on the central hub 14 transverse to the central axis 15.

In the illustrated embodiment, each of the second center body sensors is also disposed on the portions of reduced thickness 47A, 47B with a sensor, herein a strain sensor, mounted on each portion of reduced thickness 47A, 47B. Hence, each center body 31A-31D comprises second center body sensors 60 such as two strain sensors. In general, the second center body sensors 60 on opposed radial members are connected in a Wheatstone bridge. In particular, the plurality of second center body sensors 61A,61B and 61C,61D of a first pair of opposed radial members 20A and 20C, respectively, are each connected together in a first Wheatstone bridge 61 to measure a first force on the central hub 14 transverse to the central axis 15 along the X-axis that is aligned with axes 21A and 21C, while a plurality of second center body sensors 63A,63B and 63C,63D of a second pair of opposed radial members 20B and 20D, respectively, are each connected together in a second Wheatstone bridge 63 to measure a second force on the central hub 14 transverse to the central axis 15 and also transverse to the first force along Y-axis that is aligned with axes 21B and 21D. It should be noted that the first flexures 34B and 34D and second flexures 36B and 36D are substantially compliant for a force along the X-axis, while the first flexures 34A and 34C and second flexures 36A and 36C are substantially compliant for a force along the Y-axis.

In the embodiment illustrated, each portion of reduced thickness 47A and 47B of each center body 31A-31D includes a planar surface 70, herein an outwardly facing surface, extending in a first direction parallel to the central axis 15 and extending in a second direction radially with respect to the central hub 14 for each associated radial member 20A-20D. In the illustrative embodiment, each of the first center body sensors 50 described above are disposed on the planar surfaces 70. Each of the second center body sensors 60 are also disposed on the portions of reduced thickness 47A and 47B. Herein, the second center body sensors 60 are disposed on the inner surface of the apertures 32A-32D of each of the center bodies 31A-31D, opposite to the first center body sensors 50. It should be noted that if desired, the first body sensors 50 and the second body sensors 60 can be mounted in reversed fashion to the portions of reduced thickness 47A, 47B where the first body sensors 50 are mounted on the inner surface of each aperture of the center bodies 31A-31D, while the second body sensors 60 are mounted on outwardly facing surfaces of each portion of reduced thickness 47A, 47B. In addition, if desired, planar surfaces like planar surfaces 70 can be formed on the inner surface of each of the apertures 32A-32D of the center bodies 31A-31D for either the first body sensors 50 or the second body sensors 60 if so mounted in that location.

Another aspect of the invention is a method of making the load cell body 10. In particular, the method comprises fabricating from a single block of material 12 an integral assembly with the central hub 14, the annular ring 16 concentric with the central hub 14 and at least three radial members 20 extending radially with respect to the central axis 15 from the central hub 14 to the annular ring 16. Each radial member comprises the center body 31A-31D with an aperture 32A-32D extending there through along an aperture axis that is parallel to the central axis 15. The first flexure 34A-34D joins the center body 31A-31D to the central hub 14 and the second flexure 36A-36D joins the center body 31A-31D to the annular ring 16. It should be noted that the machining can be substantially from one and/or the opposite side of the load cell body 10 since mounting apertures 80 on the central hub 14 and mounting apertures 82 on the annular ring 16 as well as apertures of each of the center bodies 31A-31D are substantially parallel to the central axis 15. Likewise, the apertures 90 between the radial members 21A-21D are also oriented parallel to the central axis 15 and are of size so as to allow forming the planar surfaces 70 on each of the center bodies 31A-31D.

Although illustrated above wherein the sensors comprise strain sensors other forms of sensing devices such as optically based sensors or capacitively based sensors can also be used.

The load cell body 10 is particularly well suited for measuring the force and moment components between two bodies, a first body being mounted to the central hub 14 and a second body being mounted to the annular ring 16. Although not limited to such an application, the load cell body 10 can replaces a center portion of a wheel rim in a manner similar to the load cell body described in United States Patent 5,969,268 incorporated herein by reference in its entirety. Generally, in such an application, power is supplied to and output signals are obtained from the plurality of sensors by a controller through a slip ring assembly, if the load cell body rotates or partially rotates.

The controller calculates, records and/or displays the force and moment components measured by the load cell body. As described in United States Patent 5,969,268 operations performed by the controller to transform the output signals received from the individual sensing circuits on the members 20A-20D to obtain output signals indicative of force and moment components with respect to six degrees of freedom in a static orthogonal coordinate system. The output signals from the sensing circuits can be received by a scaling and geometric transformation circuit that adjusts the output signals to compensate for any imbalance between the sensing circuits, while another circuit can combine the output signals to provide output signals indicative of force and moment components for a rotating orthogonal coordinate system. A cross-coupling matrix circuit can be present to adjust the output signals so as to compensate for any cross-coupling effects. A coordinate transformation circuit receives an angular input from an encoder or the like so as to provide force and moment components with respect to a static orthogonal coordinate system.

Although the present invention has been described with reference to preferred embodiments, workers skilled in the art will recognize that changes may be made in form and detail without departing from the spirit and scope of the invention.

Certain embodiments of the invention are described in the following clauses:
Clause 1. A load cell body for transmitting forces and moments in plural directions, the load cell body comprising:
   a rigid central hub having a central axis;
   a rigid annular ring concentric with the central hub about the central axis;
   at least three radial members extending radially with respect to the central axis along corresponding longitudinal axes from the central hub to the annular ring wherein each radial member comprises:
      a center body with an aperture extending therethrough along an aperture axis that is parallel to the central axis;
      a first flexure joining the center body to the central hub; and
      a second flexure joining the center body to the annular ring.
Clause 2. The load cell body of clause 1 wherein each of the first flexures and each of the second flexures are compliant for moments about the central axis.
Clause 3. The load cell body of clause 2 wherein at least one of the first flexure and the second flexure of each radial member includes a sensor configured to measure bending of the flexure for a moment about the central axis.
Clause 4. The load cell body of clause 3 wherein the sensor comprises a strain sensor.
Clause 5. The load cell body of clause 4 wherein the sensor comprises a first strain sensor on a first side of the at least one of the first flexure and the second flexure of each radial member and a second strain sensor on a second side of the at least one of the first flexure and the second flexure of each radial member.
Clause 6. The load cell body of clause 5 wherein each of the first strain sensors and each of the second strain sensors are connected in a Wheatstone bridge.
Clause 7. The load cell body of clause 1 wherein each of a plurality of center bodies includes at least one center body sensor configured to measure a force on the central hub along or orthogonal to the central axis.
Clause 8. The load cell body of clause 7 wherein an outer surface of each center body includes a plurality of portions of reduced thickness.
Clause 9. The load cell body of clause 8 wherein the at least one center body sensor comprises a plurality of first center body sensors configured to measure a force on the central hub along the central axis.
Clause 10. The load cell body of clause 9 wherein the plurality of first center body sensors of each radial member is connected in a Wheatstone bridge.
Clause 11. The load cell body of clause 10 wherein each of the first center body sensors is a strain gage.
Clause 12. The load cell body of clause 11 wherein each portion of reduced thickness includes a planar surface extending in a first direction parallel to the central axis and extending in a second direction radially with respect to the central hub for each associated radial member, each of the first center body sensors being disposed on one of the planar surfaces.
Clause 13. The load cell body of clause 8 wherein the at least one center body sensor comprises a plurality of second center body sensors configured to measure a force on the central hub transverse to the central axis.
Clause 14. The load cell body of clause 13 wherein the plurality of radial members is four spaced at equal angular intervals about the central axis, and wherein the plurality of second center body sensors of a first pair of opposed radial members are each connected together in a first Wheatstone bridge to measure a first force on the central hub transverse to the central axis, and wherein the plurality of second center body sensors of a second pair of opposed radial members are each connected together in a second Wheatstone bridge to measure a second force on the central hub transverse to the central axis and transverse to the first force.
Clause 15. The load cell body of clause 14 wherein each of the second center body sensors is a strain gage disposed on an inside surface forming one of the center body apertures.
Clause 16. The load cell body of clause 1 wherein the central hub, the annular ring and the at least three radial members are integral formed from a single unitary body.
Clause 17. A load cell body for transmitting forces and moments in plural directions, the load cell body comprising:
   a rigid central hub having a central axis;
   a rigid annular ring concentric with the central hub about the central axis;
   at least three radial members extending radially with respect to the central axis along corresponding longitudinal axes from the central hub to the annular ring wherein each radial member comprises:
      a center body with an aperture extending therethrough along an aperture axis that is parallel to the central axis;
      a first flexure joining the center body to the central hub; and
      a second flexure joining the center body to the annular ring;
   a plurality of sensors configured to sense strain in each of the center bodies and/or flexure members to provide signal(s) indicative of force and/or moments with respect to the central hub or the annular ring.
Clause 18. A method of making a load cell body for transmitting forces and moments in plural directions, the method comprising:
   fabricating from a single block of material an integral assembly with a rigid central hub, a rigid annular ring concentric with the hub, at least three radial members extending radially with respect to the central axis along corresponding longitudinal axes from the central hub to the annular ring wherein each radial member comprises a center body with an aperture extending therethrough along an aperture axis that is parallel to the central axis, a first flexure joining the center body to the central hub, and a second flexure joining the center body to the annular ring.
Clause 19. The method of clause 18 wherein fabricating comprises for each radial member an outer surface of each radial member includes a plurality of portions of reduced thickness.
Clause 20. The method of clause 19 wherein each portion of reduced thickness includes a planar surface extending in a first direction parallel to the central axis and extending in a second direction radially with respect to the central hub for each associated radial member.

## Claims

1. A load cell body for transmitting forces and moments in plural directions, the load cell body comprising:
a rigid central hub having a central axis;
a rigid annular ring concentric with the central hub about the central axis;
at least three radial members extending radially with respect to the central axis along corresponding longitudinal axes from the central hub to the annular ring wherein each radial member comprises:
a center body with an aperture extending therethrough along an aperture axis that is parallel to the central axis;
a first flexure joining the center body to the central hub; and
a second flexure joining the center body to the annular ring.

2. The load cell body of claim 1 wherein each of the first flexures and each of the second flexures are compliant for moments about the central axis.

3. The load cell body of claim 2 wherein at least one of the first flexure and the second flexure of each radial member includes a sensor configured to measure bending of the flexure for a moment about the central axis, preferably wherein the sensor comprises a strain sensor, and more preferably wherein the sensor comprises a first strain sensor on a first side of the at least one of the first flexure and the second flexure of each radial member and a second strain sensor on a second side of the at least one of the first flexure and the second flexure of each radial member.

4. The load cell body of claim 1 wherein each of a plurality of center bodies includes at least one center body sensor configured to measure a force on the central hub along or orthogonal to the central axis.

5. The load cell body of claim 4 wherein an outer surface of each center body includes a plurality of portions of reduced thickness.

6. The load cell body of claim 5 wherein the at least one center body sensor comprises a plurality of first center body sensors configured to measure a force on the central hub along the central axis.

7. The load cell body of claim 6 wherein the plurality of first center body sensors of each radial member is connected in a Wheatstone bridge, preferably wherein each of the first center body sensors is a strain gage.

8. The load cell body of claim 7 wherein each portion of reduced thickness includes a planar surface extending in a first direction parallel to the central axis and extending in a second direction radially with respect to the central hub for each associated radial member, each of the first center body sensors being disposed on one of the planar surfaces.

9. The load cell body of claim 5 wherein the at least one center body sensor comprises a plurality of second center body sensors configured to measure a force on the central hub transverse to the central axis.

10. The load cell body of claim 9 wherein the plurality of radial members is four spaced at equal angular intervals about the central axis, and wherein the plurality of second center body sensors of a first pair of opposed radial members are each connected together in a first Wheatstone bridge to measure a first force on the central hub transverse to the central axis, and wherein the plurality of second center body sensors of a second pair of opposed radial members are each connected together in a second Wheatstone bridge to measure a second force on the central hub transverse to the central axis and transverse to the first force, preferably wherein each of the second center body sensors is a strain gage disposed on an inside surface forming one of the center body apertures.

11. The load cell body of claim 1 wherein the central hub, the annular ring and the at least three radial members are integral formed from a single unitary body.

12. A load cell body for transmitting forces and moments in plural directions, the load cell body comprising:
a rigid central hub having a central axis;
a rigid annular ring concentric with the central hub about the central axis;
at least three radial members extending radially with respect to the central axis along corresponding longitudinal axes from the central hub to the annular ring wherein each radial member comprises:
a center body with an aperture extending therethrough along an aperture axis that is parallel to the central axis;
a first flexure joining the center body to the central hub; and
a second flexure joining the center body to the annular ring;
a plurality of sensors configured to sense strain in each of the center bodies and/or flexure members to provide signal(s) indicative of force and/or moments with respect to the central hub or the annular ring.

13. A method of making a load cell body for transmitting forces and moments in plural directions, the method comprising:
fabricating from a single block of material an integral assembly with a rigid central hub, a rigid annular ring concentric with the hub, at least three radial members extending radially with respect to the central axis along corresponding longitudinal axes from the central hub to the annular ring wherein each radial member comprises a center body with an aperture extending therethrough along an aperture axis that is parallel to the central axis, a first flexure joining the center body to the central hub, and a second flexure joining the center body to the annular ring.

14. The method of claim 13 wherein fabricating comprises for each radial member an outer surface of each radial member includes a plurality of portions of reduced thickness.

15. The method of claim 14 wherein each portion of reduced thickness includes a planar surface extending in a first direction parallel to the central axis and extending in a second direction radially with respect to the central hub for each associated radial member.
